# EUROPÄISCHE PATENTSCHRIFT

(11) **EP 2 331 832 B1**
(45) Veröffentlichungstag und Bekanntmachung des Hinweises auf die Patenterteilung: **27.02.2019**
(21) Anmeldenummer: 09775604.3
(22) Anmeldetag: 22.08.2009
(51) Int. Cl.: F16C 9/02

(54) **LAGERDECKEL**
BEARING CAP
CHAPEAU DE PALIER

(30) Priorität: 01.09.2008 AT 13552008
(43) Veröffentlichungstag der Anmeldung: 15.06.2011
(73) Patentinhaber: Miba Sinter Austria GmbH, 4663 Laakirchen (AT)
(72) Erfinder: DICKINGER, Karl, A-4655 Vorchdorf (AT); SCHMID, Herbert, A-4655 Vorchdorf (AT); MÜLLER, Alexander, A-4813 Altmünster (AT)
(74) Vertreter: Burger, Hannes
(86) Internationale Anmeldenummer: PCT/AT2009/000322
(87) Internationale Veröffentlichungsnummer: WO 2010/022420

(56) Entgegenhaltungen:
- EP-A1- 1 075 605
- EP-A2- 0 882 901
- DE-A1- 19 819 080
- DE-A1- 19 907 661
- US-B1- 6 471 406

## Beschreibung

Die Erfindung betrifft einen Lagerdeckel für eine geteilte Lageranordnung, die neben dem Lagerdeckel einen Lagerstuhl umfasst, wobei der Lagerdeckel eine Spannfläche aufweist, die im zusammengebauten Zustand der Lageranordnung an einer Gegenspannfläche des Lagerstuhls anliegt, und wobei auf der Spannfläche und über diese vorragend ein Vorsprung ausgebildet ist, der in die Gegenspannfläche des Lagerstuhls eindrückbar ist, sowie eine entsprechende Lageranordnung mit einem Lagerdeckel und einem daran anliegenden Lagerstuhl.

Aus der EP 1 075 605 B1 ist eine geteilte Lageranordnung in einem Gehäuse, insbesondere Kurbelwellen-Gleitlager für Hubkolbenmaschinen, bekannt, umfassend einen Lagerstuhl und einen Lagerdeckel aus unterschiedlich harten Werkstoffen, wobei der gegen den Lagerstuhl spannbar angeordnete aus einem Eisenwerkstoff gebildete Lagerdeckel über seine Spannfläche vorstehend ausgebildete scharfkantig spitze Vorsprünge aufweist, die bei einer Erstmontage des Lagerdeckels mit Kraftaufwand in die Gegenspannfläche des aus einem Leichtmetall gebildeten Lagerstuhls eindrückbar sind und wobei ferner Nuten in der Spannfläche des Lagerdeckels vorgesehen sind. Die Vorsprünge sind schneiden- oder pyramidenprofilförmig ausgebildet, wobei die Vorsprünge einen Schneidenwinkel von 50° bis 110° aufweisen. Die Schneidenhöhe über der Spannfläche des Lagerdeckels beträgt zwischen 0,25 mm und 1,5 mm. Die Nuten schließen an den Schneidenflanken der Vorsprünge an und sind in die Spannfläche eingetieft, wobei diese Nuten verrundet sind mit einem Radius von 0,15 mm bis 0,30 mm. Diese Nuten dienen zur Aufnahme des beim Eindrücken der Vorsprünge in den Lagerstuhl verdrängten Werkstoffes des Lagerstuhls.

Aus der US 6,471,406 B1 ist ein Lagerdeckel bekannt, der auf der Spannfläche kegelförmige Vorsprünge aufweist, die in die Gegenspannfläche des Lagerstuhls eindrückbar sind.

Die EP 0 882 901 A2 beschreibt eine Lageranordnung mit zumindest einer Trennfläche, die eine formschlüssige Lagesicherung der an die Trennfläche grenzenden Lagerabschnitte aufweist, welche mittels beidseitig der Lagerachse angeordneten Verbindungsmittel aneinander gehalten sind, wobei zumindest einer der Lagerabschnitte in der Trennfläche mit Vorsprüngen versehen ist, der andere Lagerabschnitt im Bereich der Vorsprünge zumindest lokal eine geringere Werkstoffhärte als diese Vorsprünge aufweist und im montierten Zustand die Vorsprünge unter Bildung von bleibenden Einprägungen in diese eingreifen.

Die Aufgabe der vorliegenden Erfindung ist, einen Lagerdeckel bzw. eine geteilte Lageranordnung zu schaffen, mit dem bzw. bei der der Lagerdeckel auf dem Lagerstuhl besser fixiert werden kann.

Diese Aufgabe der Erfindung wird bei dem eingangs genannten Lagerdeckel dadurch gelöst, dass zumindest zwei Vorsprünge pro Spannfläche angeordnet sind, wobei die Vorsprünge je einen Querschnitt aufweisen, der über seine Erstreckung auf der Spannfläche variiert, und der sich in Richtung einer, sich in axialer Richtung der Lageranordnung erstreckenden Breite der Spannfläche verjüngt, wobei die Querschnittsfläche des jeweiligen Vorsprunges von einem Ende in Richtung auf das andere Ende des Vorsprunges über ihre Längserstreckung in Richtung der Breite sich verkleinert, wobei die Querschnittsverjüngungen in entgegengesetzter Richtung, insbesondere gegengleich, verlaufend ausgebildet sind.

Von Vorteil ist dabei, dass die Genauigkeit des Sitzes des Lagerdeckels auf dem Lagerstuhl vergrößert werden kann. Es wird damit also nicht nur der Vorteil des Standes der Technik erreicht, nach dem höhere Querkräfte aufgenommen werden können, sondern es ist damit auch möglich Längskräfte in axialer Richtung des Lagers verlaufend besser aufzunehmen, sodass die auf die Lageranordnung einwirkenden Kräfte besser beherrscht werden können. Es kann also mit dem Lagerdeckel nach der Erfindung auch ein Formschluss in axialer Richtung der Lageranordnung erreicht werden. Darüber hinaus ist ein richtungskonformer Zusammenbaus des Lagerdeckels mit dem Lagerstuhl besser sichergestellt. Zudem ist durch Vorsprünge, die einen variierenden Querschnitt aufweisen eine bessere Zentrierung erreichbar, sodass ein Verkippen des Lagerdeckels während des Zusammenbaus der Lageranordnung besser vermieden werden kann.

Aus produktionstechnischen Gründen wird bevorzugt, wenn der Vorsprung über seine Länge eine variierende Höhe aufweist.

Dadurch, dass zumindest zwei Vorsprünge pro Spannfläche angeordnet sind, wobei die Querschnittsverjüngungen in entgegen gesetzter Richtung, insbesondere gegengleich, verlaufend ausgebildet sind, wird der Vorteil erreicht, dass die Richtungsabhängigkeit der Aufnahme der Längskräfte bei Anordnung von sich nur verjüngenden Vorsprüngen keine Rolle mehr spielt, wie dies unter Umständen in der einfachsten Ausführungsvariante der Erfindung auftreten kann.

Die Vorsprünge können einen dreieckförmigen Querschnitt aufweisen, wodurch die Spannung beim Zusammenbau mit dem Lagerstuhl, das heißt das Eindrücken der Vorsprünge in den Werkstoff des Lagerstuhls, verbessert werden kann und damit auch eine bessere Kräftebeherrschung erreicht werden kann.

Es ist dabei auch möglich, dass die Vorsprünge zumindest teilweise gerundet ausgeführt sind, um damit die Fixierung des Lagerdeckels am Lagerstuhl zu vereinfachen.

Zur Verbesserung dieses Effektes kann die Rundung einen Radius aufweisen, der ausgewählt ist aus einem Bereich mit einer unteren Grenze von 0,01 mm und einer oberen Grenze von 10 mm. Es wird damit auch möglich, insbesondere wenn die Spitze des Vorsprunges mit der Rundung versehen ist, diesen Bereich höher zu verdichten bzw. zu kalibrieren, sodass bei Fertigung des Lagerdeckels mittels Sintertechnologie diesem Bereich, der in die Gegenspannfläche des Lagerstuhls eingepresst wird, eine höhere mechanische Festigkeit verliehen werden kann.

Es ist dabei auch möglich, dass die Rundung einen Radius aufweist, der ausgewählt ist aus einem Bereich mit einer unteren Grenze von 0,02 mm und einer oberen Grenze von 4 mm, bevorzugt einer unteren Grenze von 0,1 mm und einer oberen Grenze von 2 mm.

Um das Eindrücken der Vorsprünge des Lagerdeckels in die Gegenspannfläche des Lagerstuhls zu verbessern, weist zumindest eine der in Richtung der Breite der Spannfläche verlaufende Seitenfläche des Vorsprunges bzw. der Vorsprünge einen Neigungswinkel gegen die Spannfläche auf, der ausgewählt ist aus einem Bereich mit einer unteren Grenze von 90 ° und einer oberen Grenze von 160 °.

Zur Verbesserung dieses Effektes ist es von Vorteil, wenn dieser Neigungswinkel ausgewählt ist aus einem Bereich mit einer unteren Grenze von 100 ° und einer oberen Grenze von 145 °, insbesondere aus einem Bereich mit einer unteren Grenze von 115 ° und einer oberen Grenze von 130 °.

Es besteht weiters die Möglichkeit, dass der Vorsprung bzw. die Vorsprünge mit einer Absetzung im Bereich zumindest einer von zwei Seitenflanken versehen ist bzw. sind, sodass die Materialverdrängung in der Gegenspannfläche des Lagerstuhls verbessert werden kann.

Mit Absetzung im Sinne der Erfindung ist eine Diskontinuität im Profilquerschnitt gemeint, beispielsweise eine Änderung im Neigungswinkel der Fläche zur Horizontalen.

Zur weiteren Verbesserung dieses Effektes ist gemäß einer weiteren Ausführungsvariante vorgesehen, dass die Absetzung eine Ausnehmung bzw. Vertiefung in der Seitenflanke bildet, welche zumindest einen Teil des verdrängten Materials der Gegenspannfläche aufnehmen kann. Es wird damit eine Art "Gebirgsprofil" ausgebildet, die auch eine verbesserte Verspannung vom Lagerdeckel mit dem Lagerstuhl ermöglicht und damit zur Aufnahme höherer Kräfte, insbesondere Querkräfte und Längskräfte, herangezogen werden kann.
Zum besseren Verständnis der Erfindung wird diese anhand der nachfolgenden Figuren näher erläutert.

Es zeigen dabei jeweils in stark schematisch vereinfachter Darstellung:
- Fig. 1: einen Querschnitt durch eine nicht erfindungsgemäße geteilte Lageranordnung;
- Fig. 2: einen Ausschnitt aus einem Lagerdeckel im Bereich der Spannfläche;
- Fig. 3: einen Vorsprung im Querschnitt;
- Fig. 4: eine andere Ausführungsvariante eines Vorsprunges im Querschnitt;
- Fig. 5: eine weitere Ausführungsvariante eines Vorsprungs im Querschnitt;
- Fig. 6: eine Ausführungsvariante eines Vorsprunges im Querschnitt;
- Fig. 7: eine Ausführungsvariante eines Vorsprunges im Querschnitt;
- Fig. 8: einen Ausschnitt aus einem Lagerdeckel in Schrägansicht im Bereich der Spannfläche mit nicht erfindungsgemäßen Vorsprüngen;
- Fig. 9: einen Ausschnitt aus einem Lagerdeckel in Draufsicht mit sich in der Breite verändernden nicht erfindungsgemäßen Vorsprüngen;
- Fig. 10: einen Ausschnitt aus einem Lagerdeckel in Seitenansicht geschnitten mit einem sägezahnförmigen Vorsprung;
- Fig. 11: einen Ausschnitt aus einem Lagerdeckel in Seitenansicht geschnitten mit einer Variante der Sägezahnform der Vorsprünge;
- Fig. 12: einen Ausschnitt aus einem Lagerdeckel in Seitenansicht geschnitten mit einem im Querschnitt wellenförmigen Vorsprung;
- Fig. 13: einen Ausschnitt aus einem Lagerdeckel in Draufsicht mit sich in der Breite verändernden, nicht erfindungsgemäßen Vorsprüngen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

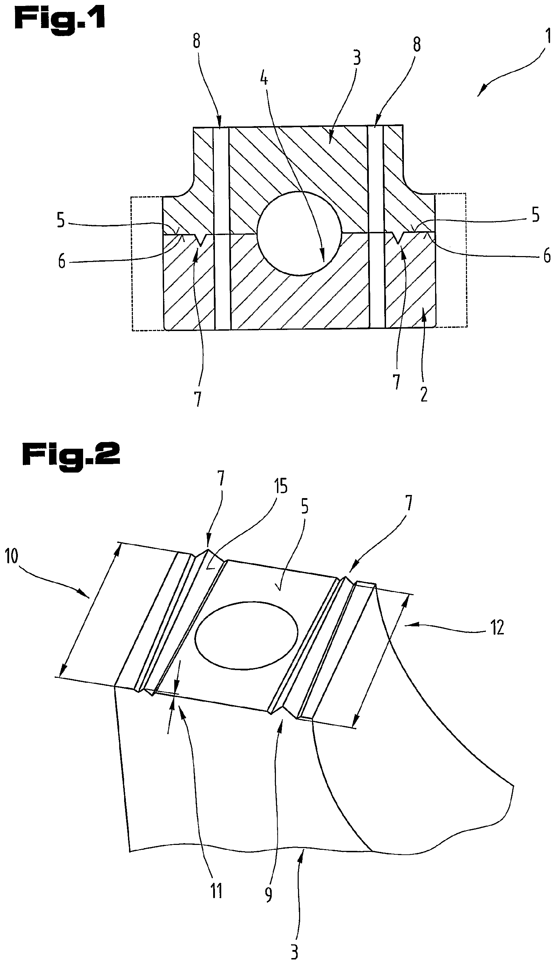

Fig. 1 zeigt eine geteilte Lageranordnung 1, wie sie beispielsweise in einem Maschinengehäuse einer Hubkolbenmaschine eingesetzt wird. Diese Lageranordnung 1 umfasst einen Lagerstuhl 2 sowie einen Lagerdeckel 3, die zusammen ein Gleitlager 4 für beispielsweise eine Kurbelwelle ausbilden. Der Lagerdeckel 3 weist an seinen beiden distalen Endbereichen jeweils eine Spannfläche 5 und der Lagerstuhl 2 an seinen beiden Endbereichen jeweils den Spannflächen 5 gegenüberliegend Gegenspannflächen 6 auf. Über die Spannflächen 5 vorragend ist an diesen zumindest ein Vorsprung 7 pro Spannfläche 5 angeordnet, der im zusammengebauten Zustand der Lageranordnung in die Gegenspannfläche 6 des Lagerstuhls 2 durch das Zusammenspannen von Lagerstuhl 2 und Lagerdeckel 3 hineingedrückt wird. Für das Spannen des Lagerstuhls 2 mit dem Lagerdeckel 3 ist in den distalen Endbereichen jeweils eine durchgehende Bohrung 8 angeordnet. In dieser Bohrung 8 findet ein nicht näher dargestellter Bolzen seine Aufnahme und wird mit entsprechenden Muttern die Vorspannung erreicht. Alternativ dazu kann auch im Lagerstuhl 2 bzw. im Lagerdeckel 3 diese Bohrung 8 nicht durchgehend ausgeführt sein, sondern als Sacklochbohrung mit einem Innengewinde.

Es besteht weiters die Möglichkeit, wie dies strichliert in Fig. 1 angedeutet ist, dass die distalen Endbereiche des Lagerdeckels 3 in Richtung auf den Lagerstuhl 2 und diesen seitlich übergreifend ausgebildet sind.

Die Vorsprünge 7 sind bei dieser Ausführungsvariante an der dem Gleitlager 4 abgewandten Seite der Bohrungen 8 an der Spannfläche 5 angeordnet, können jedoch auch an der dem Gleitlager 4 zugewandten Seite der Bohrung 8 fakultativ oder zusätzlich angeordnet sein.

Zumindest die Vorsprünge 7 bestehen aus einem Werkstoff, der härter ist als der Werkstoff des Lagerstuhls 2 im Bereich der Gegenspannfläche 6, sodass diese Vorsprünge 7 durch das Zusammendrücken und Spannen von Lagerstuhl 2 und Lagerdeckel 3 in die Gegenspannfläche 6 eingedrückt werden können. Bevorzugt ist jedoch der gesamte Lagerdeckel 3 aus diesem härteren Werkstoff hergestellt. Beispielsweise können der Lagerdeckel 3 aus einem Eisenwerkstoff und der Lagerstuhl 2 aus einem Leichtmetall hergestellt sein. Insbesondere ist der Lagerdeckel 3 aus einem Sintereisenwerkstoff hergestellt.

Das Gleitlager 4 kann durch Direktbeschichtung der entsprechenden Oberflächen des Lagerstuhls 2 und des Lagerdeckels 3 hergestellt sein, ebenso ist es möglich, das an sich bekannte Gleitlagerhalbschalen eingesetzt werden.

Wie besser aus Fig. 2 ersichtlich ist, welche den Lagerdeckel 3 im Bereich der Spannfläche 5 zeigt und zudem jeweils 2 Vorsprüngen 7 pro Spannfläche 5 darstellt, sind die Vorsprünge 7 derart ausgebildet, dass ein Querschnitt 9 in Richtung einer Breite 10 der Spannfläche 5, die sich in axialer Richtung der Lageranordnung 1 (Fig. 1) erstreckt, sich verjüngend ausgebildet ist, also die Querschnittsfläche des Vorsprunges 7 von einem Ende in Richtung auf das andere Ende des Vorsprunges 7 über ihre Längserstreckung in Richtung der Breite 10 sich verkleinert.

Es ist bei der Ausführungsvariante nach Fig. 1 möglich, dass sich die beiden Vorsprünge 7 auf den beiden Spannflächen 5 hinsichtlich ihres Querschnittes 9, das heißt der Querschnittsfläche, in entgegen gesetzter Richtung verjüngen, wie dies bei der Ausführungsvariante nach Fig. 2 für eine Spannfläche 5 dargestellt ist. Ebenso besteht die Möglichkeit, dass diese Querschnittsverjüngung über die Breite 10 der beiden Spannflächen 5 für beide Vorsprünge 7 gleich gerichtet ist.

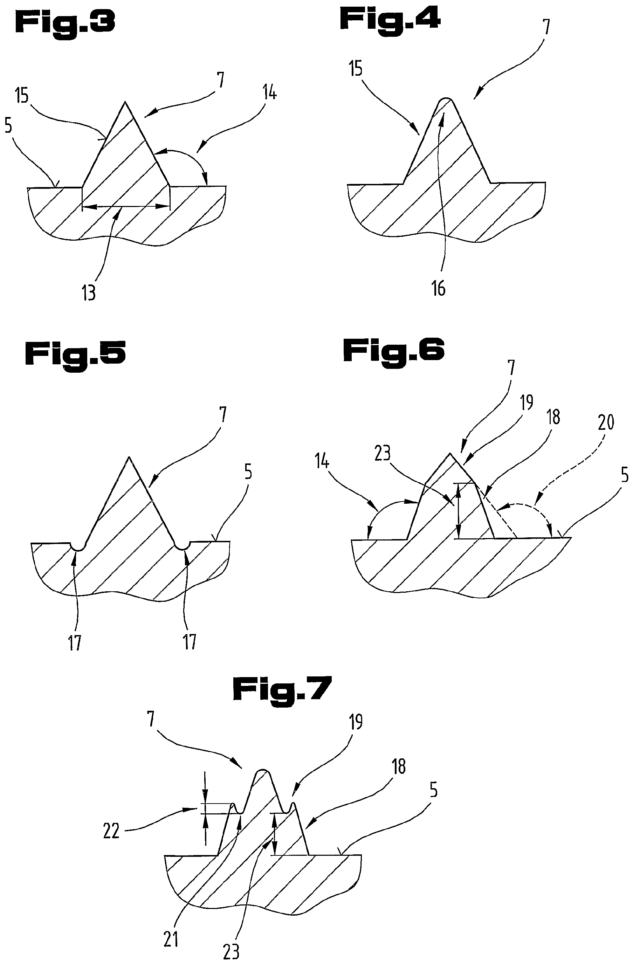

Es sei an dieser Stelle auch erwähnt, dass es möglich ist, dass, wie dies aus der Ausführungsvariante aus Fig. 2 ersichtlich ist, sich auch eine Höhe 11 über eine Länge 12 der Vorsprünge 7 in Richtung der Breite 10 der Spannfläche 5 verringert. Es besteht also die Möglichkeit, dass einerseits eine Basisbreite 13 (Fig. 3) der Vorsprünge 7 über die Länge 12 geringer wird. Ebenso besteht die Möglichkeit, dass sich ein Neigungswinkel 14 (Fig. 3) mit dem eine Seitenfläche 15 gegen die Spannfläche 5 geneigt ist über die Länge 12 der Vorsprünge 7 sich vergrößert. Selbstverständlich besteht auch die Möglichkeit, dass Varianten hiervon, also beispielsweise eine sich verändernde Basisbreite 13 und sich ein verändernder Neigungswinkel 14 oder eine sich verändernde Basisbreite 13 und eine sich verändernde Höhe 11 oder ein sich verändernder Neigungswinkel 14 und eine sich verändernde Höhe 11 oder eine sich verändernde Basisbreite 13, eine sich verändernde Höhe 11 und ein sich verändernder Neigungswinkel 14 über die Länge 12 der Vorsprünge 7 ausgebildet wird.

Zudem sei erwähnt, dass obwohl in Fig. 1 lediglich ein Vorsprung 7 pro Spannfläche 5 bzw. in Fig. 2 zwei Vorsprünge 7 pro Spannfläche 5 angeordnet sind, auch mehr als zwei dieser Vorsprünge 7 pro Spannfläche 5 des Lagerdeckels 3 angeordnet werden, beispielsweise zwei unmittelbar nebeneinander liegend angeordnete Vorsprünge 7, sodass also 3, 4, 5, 6 oder mehr derartige Vorsprünge 7 an der Spannfläche 5 des Lagerdeckels 3 ausgebildet sein können.

Mit diesen sich hinsichtlich ihres Querschnittes 9 über die Länge 12 sich verändernden Vorsprüngen 7 wird einerseits eine bessere formschlüssige Verbindung zwischen Lagerstuhl 2 und Lagerdeckel 3 erreicht, andererseits können damit nicht nur Querbelastungen sondern auch Längsbelastungen in axialer Richtung, welche auf die Lageranordnung 1 einwirken, besser aufgenommen werden.

Der Neigungswinkel 14 mit dem die Seitenfläche 15 gegen die Spannfläche 5 geneigt ist, kann einen Wert aufweisen, der aus einem Bereich ausgewählt ist, mit einer unteren Grenze von 90 ° und einer oberen Grenze von 160 °.

Die Veränderung des Neigungswinkels 14 über die Länge 12 kann beispielsweise ausgewählt sein aus einem Bereich mit einer unteren Grenze von 5° pro 1 cm und einer oberen Grenze von 120 ° pro 1 cm.

Die Höhe 11 kann einen Maximalwert von 4 mm aufweisen.

Die Veränderung dieser Höhe 11 über die Länge 12 der Vorsprünge 7 kann beispielsweise ausgewählt sein aus einem Bereich mit einer unteren Grenze von 0 mm pro 1 cm und einer oberen Grenze von 4 mm pro 1 cm, bzw. aus einem Bereich mit einer unteren Grenze von 1 mm pro 1 cm und einer oberen Grenze von 3 mm pro 1 cm.

Die Basisbreite 13 kann einen Maximalwert von 10 mm aufweisen.

Die Veränderung dieser Basisbreite 13 über die Länge 12 der Vorsprünge 7 kann beispielsweise ausgewählt sein aus einem Bereich mit einer unteren Grenze von 0 mm pro 1 cm und einer oberen Grenze von 10 mm pro 1 cm, bzw. aus einem Bereich mit einer unteren Grenze von 1 mm pro 1 cm und einer oberen Grenze von 8 mm pro 1 cm, bzw. aus einem Bereich mit einer unteren Grenze von 2 mm pro 1 cm und einer oberen Grenze von 5 mm pro 1 cm.

Neben der Schneidenform bzw. der dreieckförmigen Querschnittsform der Vorsprünge 7 entsprechend den Fig. 1 bis 3 besteht im Rahmen der Erfindung die Möglichkeit, dass zumindest die Spitze dieser Dreiecksform gerundet ausgeführt ist, wie dies aus Fig. 4 ersichtlich ist. Ein Radius 16 dieser Rundung kann dabei ausgewählt sein aus einem Bereich mit einer unteren Grenze von 0,01 mm und einer oberen Grenze von 4 mm. Es besteht dabei weiters die Möglichkeit, dass sich dieser Radius 16 der Rundung der Vorsprünge 7 über die Länge 12 (Fig. 2) verändert, also beispielsweise größer oder kleiner wird. Die Veränderung des Radius 16 über die Länge 12 der Vorsprünge 7 kann dabei in dem angegebenen Bereich schwanken, beispielsweise kann die Veränderung des Radius 16 über die Länge 12 ausgewählt sein aus einem Bereich mit einer unteren Grenze von 0,02 mm pro 1 cm und einer oberen Grenze von 3 mm pro 1 cm.

Es sei an dieser Stelle erwähnt, dass die Änderungen von Abmessungen der Vorsprünge 7, die zu den voranstehend beschriebenen Ausführungsvarianten der Erfindung genannt werden, vorzugsweise kontinuierlich verlaufend ausgebildet sind. Es besteht im Rahmen der Erfindung jedoch auch die Möglichkeit, diese Veränderungen diskontinuierlich, periodisch oder aperiodisch vorzusehen.

Es kann auch zumindest eine der Seitenflächen 15 der Vorsprünge 7, also beispielsweise die äußere oder die innere, dem Gleitlager 4 näher zugewandte oder beide, mit einer Bombierung versehen sein, wobei ein Bombierungsradius ausgewählt sein kann aus einem Bereich mit einer unteren Grenze von b/2, d.h. der halben Breite der mit der Bombierung versehenen Fläche, und einer oberen Grenze von 4 m.

Wie aus Fig. 5 ersichtlich ist, besteht auch bei dem Lagerdeckel 1 (Fig. 1) nach der Erfindung wie im eingangs zitierten Stand der Technik die Möglichkeit, dass neben den Vorsprüngen 7 an diese angrenzend rillenförmige Ausnehmungen 17 in der Spannfläche 5 ausgebildet sind, um das während des Zusammenfügens des Lagerdeckels 3 mit dem Lagerstuhl 2 (Fig. 1) verdrängte Material zumindest teilweise in diesen Ausnehmungen 17 aufnehmen zu können. Der Querschnitt dieser Ausnehmungen 17 ist nicht zwingenderweise gerundet ausgeführt, sondern besteht auch die Möglichkeit, dreieckförmige, quadratische bzw. rechteckige oder trapezförmige Nuten als Ausnehmungen 17 vorzusehen, wobei Eckbereiche dieser Ausnehmungen mit Rundungen versehen sein können.

Die länglichen Vorsprünge 7 können weiters, wie dies in Fig. 6 dargestellt ist, im Bereich von Seitenflanken 18 mit einer Absetzung 19 versehen sein. Diese Absetzung 19 kann dabei derart ausgestaltet sein, dass der Neigungswinkel 14, mit dem die Seitenflanke 18 gegen die Spannfläche 5 geneigt ist, sich im Bereich der Absetzung 19 ändert, also größer wird, wodurch der Vorsprung 7 - geometrisch betrachtet - im Querschnitt 9 aus einem von der Spannfläche 5 sich in Richtung auf die Gegenspannfläche 6 (Fig. 1) sich erstreckenden, zumindest teilweise symmetrischen Trapez und einem von diesem aus verlaufenden Dreieck besteht. Es wird damit ebenfalls eine bessere Materialverdrängung während des Zusammenspannens und des Eindrückens der Vorsprünge 7 in die Gegenspannfläche 6 des Lagerstuhls 2 (Fig. 1) erreicht. Ein dabei zusätzlich ausgebildeter Neigungswinkel 20 kann ausgewählt sein aus einem Bereich mit einer unteren Grenze von 90 ° und einer oberen Grenze von 170 °.
In einer Ausführungsvariante dazu kann der untere Bereich des Vorsprunges 7 nach Fig. 6 einen größeren Neigungswinkel 14 aufweisen und der obere Bereich, d.h. die Absetzung 19, einen dazu kleineren Neigungswinkel 20, sodass also der untere Bereich flacher und der obere Bereich steiler ausgeführt sind.
Wie aus Fig. 7 ersichtlich ist, besteht im Rahmen der Erfindung die Möglichkeit, dass diese Absetzung 19 des Vorsprunges 7 so weit ausgeführt ist, dass diese Absetzung 19 eine Ausnehmung 21 bzw. Vertiefung in der Seitenflanke 18 bildet, sodass ein "gebirgsförmiger" Querschnitt des Vorsprunges 7 entsteht. Eine Tiefe 22 der Ausnehmung 21 kann dabei ausgewählt sein aus einem Bereich mit einer unteren Grenze von 0,01 mm und einer oberen Grenze von 2 mm. Diese Tiefe 21 wird dabei senkrecht auf die Spannfläche 5 gemessen. Eine Höhe 23 der Absetzung 19 über der Spannfläche 5 kann dabei ausgewählt sein aus einem Bereich mit einer unteren Grenze von 0,01 mm und einer oberen Grenze von 3 mm, beispielsweise einem Bereich mit einer unteren Grenze von 0,1 mm und einer oberen Grenze von 2 mm.
Sind an beiden Seitenflanken 18 Absetzungen 19 vorgesehen, so kann diese auf einer unterschiedlichen Höhe 23 liegen, beispielsweise die äußere höher als die innere, dem Gleitlager 4 näher zugewandte Absetzung 19.

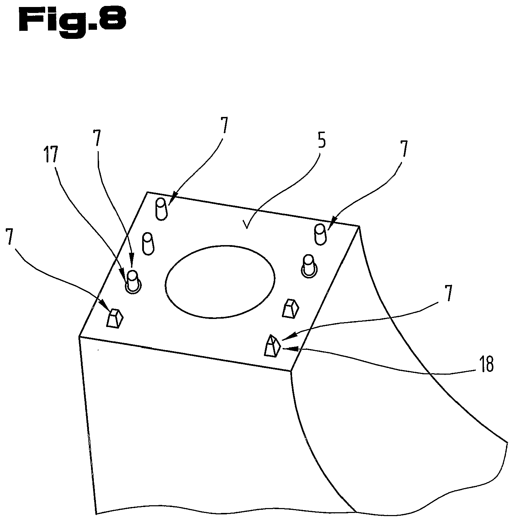

Fig. 8 zeigt eine nicht erfindungsgemäße Ausführungsvariante bei der die Vorsprünge 7 nicht länglich ausgebildet sind, wie dies zum Beispiel in Fig. 2 dargestellt ist, sondern diskrete Vorsprünge 7 vorgesehen sind. Diese Vorsprünge 7 können beispielsweise kegel- bzw. kegelstumpfförmig ausgebildet sein oder aber, wie dies im unteren Teil der Spannfläche 5 in Fig. 8 dargestellt ist, pyramiden- oder pyramidenstumpfförmig. Es können dabei mehrere dieser Vorsprünge 7 über die Spannfläche 5 verteilt angeordnet sein. Bei den pyramidenförmigen Vorsprüngen 7 besteht wiederum die Möglichkeit, wie dies in Fig. 8 angedeutet ist, dass diese mit der Absetzung 19 versehen sind und die Seitenflächen der Spitze der Pyramide einen größeren Neigungswinkel zur Spannfläche 5 aufweisen, als die Seitenflächen des Pyramidenstumpfes. Auch bei dieser Ausführungsvariante können um die Vorsprünge 7 verlaufend die Ausnehmungen 17 in der Spannfläche 5 ausgebildet sein, zur Aufnahme von Material, welches durch das Eindrücken der Vorsprünge 7 in die Gegenspannfläche 6 des Lagerstuhls 2 (Fig. 1) von diesen Vorsprüngen 7 verdrängt wird.

Selbstverständlich besteht auch bei dieser Variante die Möglichkeit, dass in den Seitenflächen der Vorsprünge 7 die Ausnehmungen 21 (Fig. 7) ausgebildet sind.
Es ist nicht zwingend vorgesehen, dass von den diskreten Vorsprüngen 7 nach Fig. 8 mehrere unterschiedliche, wie dies zur besseren Veranschaulichung der Erfindung dargestellt ist, vorgesehen werden.

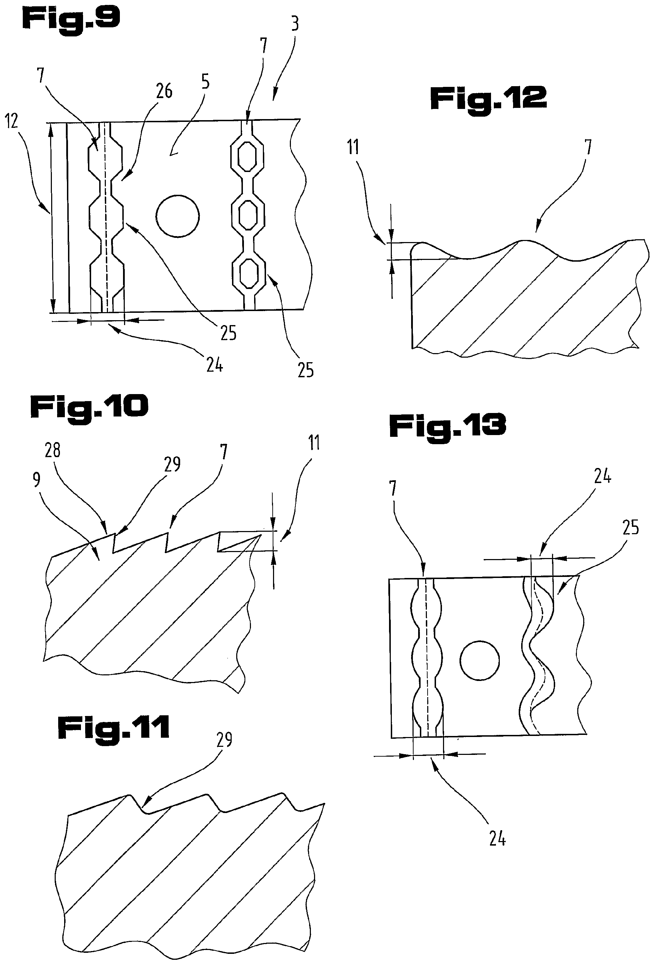

Fig. 9 zeigt einen Ausschnitt aus dem Lagerdeckel 3 im Bereich der Spannfläche 5 in Draufsicht. Es sind dabei mehrere verschiedene Ausführungsvarianten der Vorsprünge 7 dargestellt. Im linken Teil der Fig. 9 sind ist ein Vorsprung 7 gezeigt, der eine sich über die Länge 12 periodisch verändernde Breite 24 aufweist. Es sind dabei breitere Bereiche 25 und stegartige Bereiche 26 ausgebildet, die sich in der Abfolge abwechseln. Strichliert ist angedeutet, dass dieser Vorsprung 7 ebenfalls schneidenartig, gegebenenfalls mit einer Rundung versehen, ausgebildet sein kann.

Diese Abfolge von sich hinsichtlich der Breite 24 sich verjüngenden Bereiche 25, 26 kann auch zu jener in Fig. 9 beispielhaften Darstellung unterschiedlich sein, beispielsweise aperiodisch. Zudem kann die Länge der Bereiche 25, 26 in Richtung der Länge 12 des Vorsprunges 7 zu den dargestellten unterschiedlich sein. Es sind weiters auch mehrere Abstufungen bzgl. Der Breite 24 möglich. Zudem können die in Draufsicht konischen Übergänge zwischen den Bereichen mit einem anderen Konuswinkel ausgeführt sein als dargestellt.

Im rechten Teil der Fig. 9 ist angedeutet, dass der Vorsprung 7 in den breiteren Bereichen 25 ein Plateau aufweisen können, also abgeflacht sind. Anstelle der Plateaus kann jedoch auch eine zumindest annähernd pyramidenförmiger Aufbau in diesem Bereich ausgeführt sein.
Fig. 10 zeigt eine andere Ausführungsvariante des Querschnittes 9, d.h. der Querschnittsveränderung des Vorsprunges 7. Dieser ist dabei im Querschnitt 9 in Seitenansicht mit einer sich verändernden Höhe 11 ausgebildet, die sägezahnförmig ist, mit einer ansteigenden ersten Flanke 28 und einer daran anschließenden zumindest annähernd senkrecht abfallenden zweiten Flanke 29. Die zweite Flanke 29 kann auch in der Richtung der ersten Flanke 28 geneigt ausgebildet sein, sodass eine Art Hinterschneidung entsteht.
Es besteht hier die Möglichkeit, dass zumindest einzelne der Zähne mit zueinander unterschiedlicher Höhe 11 ausgeführt sind. Auch kann zwischen den Zähnen ein Steg ausgebildet sein, der parallel zur Spannfläche 5 (z.B. Fig. 1) verläuft, bzw. können die Zähne beabstandet zueinander, also diskret, angeordnet sein. Weiters können auch bei dieser Ausführungsvariante die Seitenflächen gegen die Spannfläche 5 geneigt ausgeführt sein, wie dies voranstehend schon ausgeführt wurde.
In Ergänzung dazu zeigt Fig. 11 eine Ausführungsvariante der Zähne, bei der die Flanken 29 nicht senkrecht sondern in einem dazu verschiedenen Winkel geneigt gegen die Spannfläche 5 (Fig. 1) ausgeführt sind.
Mit Fig. 12 soll verdeutlicht werden, dass die Änderung der Höhe 11 des Vorsprunges 7 auch wellenförmig ausgeführt sein kann, wobei die Erfindung nicht auf die dargestellte Wellenform beschränkt ist, insbesondere sich die Höhe 11 auch diskontinuierlich bzw. aperiodisch über die Länge 12 (Fig. 2) des Vorsprunges 7 verändern kann.
Fig. 13 soll schließlich verdeutlichen, dass der Vorsprung 7 auch hinsichtlich seiner Breite 24 eine wellenförmige Veränderung aufweisen kann, wobei auch hier wiederum, wie dies im linken Teil der Fig. 13 strichliert angedeutet ist, eine Schneidenform, gegebenenfalls mit abgerundeter Spitze, ausgebildet sein kann.

Diese Wellenform kann, wie im linken Teil der Fig. 13 dargestellt, mit einer Spiegelebene ausgeführt sein, oder, wie im rechten Teil der Fig. 13 gezeigt, schlangenlinienförmig ausgebildet sein, wobei auch hier wieder Bereiche 25 mit größerer Breite 24 angeordnet sein können.
Es sei erwähnt, dass es selbstverständlich möglich ist, mehrere geometrisch unterschiedlich ausgeformte Vorsprünge 7 auf einer Spannfläche 5 vorzusehen, beispielsweise die länglichen, insbesondere schneidenförmigen bzw. mit einer Rundung im Bereich der Spitze der Schneiden versehenen Vorsprünge 7 mit den diskreten Vorsprüngen 7 nach Fig. 8.
Der Vollständigkeit halber soll erwähnt sein, dass die beiden Spannflächen 5 des Lagerdeckels 3 identisch ausgeführt sein können.
Die Ausführungsbeispiele zeigen mögliche Ausführungsvarianten des Lagerdeckels 3, wobei an dieser Stelle bemerkt sei, dass die Erfindung nicht auf die speziell dargestellten Ausführungsvarianten derselben eingeschränkt ist, sondern auf den Gegenstand der Patentansprüche.

Der Ordnung halber sei abschließend darauf hingewiesen, dass zum besseren Verständnis des Aufbaus Lagerdeckels 3 dieser bzw. dessen Bestandteile teilweise unmaßstäblich und/oder vergrößert und/oder verkleinert dargestellt wurden.

### Bezugszeichenaufstellung

- 1: Lageranordnung
- 2: Lagerstuhl
- 3: Lagerdeckel
- 4: Gleitlager
- 5: Spannfläche
- 6: Gegenspannfläche
- 7: Vorsprung
- 8: Bohrung
- 9: Querschnitt
- 10: Breite
- 11: Höhe
- 12: Länge
- 13: Basisbreite
- 14: Neigungswinkel
- 15: Seitenfläche
- 16: Radius
- 17: Ausnehmung
- 18: Seitenflanke
- 19: Absetzung
- 20: Neigungswinkel
- 21: Ausnehmung
- 22: Tiefe
- 23: Höhe
- 24: Breite
- 25: Bereich
- 26: Bereich

- 28: Flanke
- 29: Flanke

## Patentansprüche

1. Lagerdeckel (3) für eine geteilte Lageranordnung (1) die neben dem Lagerdeckel (3) einen Lagerstuhl (2) umfasst, wobei der Lagerdeckel (3) eine Spannfläche (5) aufweist, die im zusammengebauten Zustand der Lageranordnung (1) an einer Gegenspannfläche (6) des Lagerstuhls (2) anliegt, und wobei auf der Spannfläche (5) und über diese vorragend ein in axialer Richtung der Lageranordnung (1) sich erstreckender Vorsprung (7) ausgebildet ist, der in die Gegenspannfläche (6) des Lagerstuhls (2) eindrückbar ist, **dadurch gekennzeichnet, dass** zumindest zwei Vorsprünge (7) pro Spannfläche (5) angeordnet sind, wobei die Vorsprünge (7) je einen Querschnitt (9) aufweisen, der über seine Erstreckung auf der Spannfläche (5) variiert, und der sich in Richtung einer, sich in axialer Richtung der Lageranordnung (1) erstreckenden Breite (10) der Spannfläche (5) verjüngt, wobei die Querschnittsfläche des jeweiligen Vorsprunges (7) von einem Ende in Richtung auf das andere Ende des Vorsprunges (7) über ihre Längserstreckung in Richtung der Breite (10) sich verkleinert, wobei die Querschnittsverjüngungen in entgegengesetzter Richtung, insbesondere gegengleich, verlaufend ausgebildet sind.

2. Lagerdeckel (3) nach Anspruch 1, **dadurch gekennzeichnet, dass** eine Höhe (11) des Vorsprunges (7) über eine Länge (12) des Vorsprunges (7) variiert.

3. Lagerdeckel (3) nach einem der Ansprüche 1 oder 2, **dadurch gekennzeichnet, dass** die Vorsprünge (7) einen dreieckförmigen Querschnitt (9) aufweisen.

4. Lagerdeckel (3) nach einem der Ansprüche 1 bis 3, **dadurch gekennzeichnet, dass** die Vorsprünge (7) zumindest teilweise gerundet ausgeführt sind.

5. Lagerdeckel (3) nach Anspruch 4, **dadurch gekennzeichnet, dass** die Rundung einen Radius (16) aufweist, der ausgewählt ist aus einem Bereich mit einer unteren Grenze von 0,01 mm und einer oberen Grenze von 4 mm.

6. Lagerdeckel (3) nach einem der Ansprüche 1 bis 5, **dadurch gekennzeichnet, dass** zumindest eine der in Richtung der Breite (10) der Spannfläche (5) verlaufende Seitenfläche (15) des Vorsprunges (7) bzw. der Vorsprünge (7) einen Neigungswinkel (14) gegen die Spannfläche (5) aufweist, der ausgewählt ist aus einem Bereich mit einer unteren Grenze von 90 ° und einer oberen Grenze von 160 °.

7. Lagerdeckel (3) nach einem der Ansprüche 1 bis 6, **dadurch gekennzeichnet, dass** der Vorsprung (7) bzw. die Vorsprünge (7) mit einer Absetzung (19) im Bereich zumindest einer von zwei Seitenflanken (18) versehen ist bzw. sind.

8. Lagerdeckel (3) nach Anspruch 7, **dadurch gekennzeichnet, dass** die Absetzung (19) eine Ausnehmung (21) bzw. Vertiefung in der Seitenflanke (18) bildet.

9. Lageranordnung (1) mit einem Lagerdeckel (3) und einem daran anliegenden Lagerstuhl (2), **dadurch gekennzeichnet, dass** der Lagerdeckel (3) nach einem der Ansprüche 1 bis 8 gebildet ist.

## Claims

1. A bearing cap (3) for a divided bearing configuration (1) comprising in addition to the bearing cap (3) a bearing bracket (2), wherein the bearing cap (3) has a clamping surface (5), which is in contact with an opposing clamping surface (6) on the bearing bracket (2) in the assembled state of the bearing configuration (1), and wherein a protrusion (7) extending in the axial direction of the bearing configuration (1) is designed to protrude beyond this clamping surface (5) and can be pressed into the opposing clamping surface (6) of the bearing bracket (2), **characterized in that** at least two protrusions (7) are provided per clamping surface (5), wherein the protrusions (7) each have a cross section (9), which varies over its extent on the clamping surface (5) and which tapers in the direction of the width (10) of the clamping surface (5) extending in the axial direction of the bearing configuration (1), wherein the cross-sectional area of the respective protrusion (7) becomes smaller over its longitudinal extent in the direction of the width (10) from one end in the direction of the other end of the protrusion (7), wherein the tapering in cross section is designed to run in opposite directions, in particular in opposite but equal directions.

2. The bearing cap (3) according to claim 1, **characterized in that** the height (11) of the protrusion (7) varies over the length (12) of the protrusion (7).

3. The bearing cap (3) according to any one of claims 1 or 2, **characterized in that** the protrusions (7) have a triangular cross section (9).

4. The bearing cap (3) according to any one of claims 1 to 3, **characterized in that** the protrusions (7) are designed to be at least partially rounded.

5. The bearing cap (3) according to claim 4, **characterized in that** the rounding has a radius (16), which is selected from a range having a lower limit of 0.01 mm and an upper limit of 4 mm.

6. The bearing cap (3) according to any one of claims 1 to 5, **characterized in that** at least one of the side faces (15) of the protrusion (7) and/or of the protrusions (7) running in the direction of the width (10) of the clamping surface (5) has an angle of inclination (14) to the clamping surface (5), which is selected from a range with a lower limit of 90° and an upper limit of 160°.

7. The bearing cap (3) according to any one of claims 1 to 6, **characterized in that** the protrusion (7) and/or the protrusions (7) is/are provided with a setback (19) in the area of at least one of two side flanks (18).

8. The bearing cap (3) according to claim 7, **characterized in that** the setback (19) forms a recess (21) and/or an indentation in the side flank (18).

9. The bearing configuration (1) having a bearing cap (3) and a bearing bracket (2) adjacent thereto, **characterized in that** the bearing cap (3) is formed according to any one of claims 1 to 8.

## Revendications

1. Chapeau de palier (3) pour un ensemble de palier (1) divisé qui, outre le chapeau de palier (3), comprend un corps de palier (2), le chapeau de palier (3) comportant une surface de serrage (5) qui, quand l'ensemble de palier (1) est assemblé, est adjacente à une contre-surface de serrage (6) du corps de palier (2), et où, sur la surface de serrage (5) et dépassant de celle-ci, il est disposé une saillie (7), s'étendant dans la direction axiale de l'ensemble de palier (1), qui peut être enfoncée dans la contre-surface de serrage (6) du corps de palier (2), **caractérisé en ce qu'**il est disposé au moins deux saillies (7) par surface de serrage (5), les saillies (7) comportant respectivement une section transversale (9) dont l'étendue varie sur la surface de serrage (5) et qui se rétrécit en direction d'une largeur (10) de la surface de serrage (5) s'étendant dans la direction axiale de l'ensemble de palier (1), la surface de section transversale de la saillie (7) respective diminuant à partir d'une extrémité en direction de l'autre extrémité de la saillie (7) sur son étendue longitudinale en direction de la largeur (10), les rétrécissements de section transversale étant constitués dans la direction opposée, en particulier de façon diamétralement opposée.

2. Chapeau de palier (3) selon la revendication 1, **caractérisé en ce qu'**une hauteur (11) de la saillie (7) varie sur une longueur (12) de la saillie (7).

3. Chapeau de palier (3) selon l'une des revendications 1 ou 2, **caractérisé en ce que** les saillies (7) comportent une section transversale (9) triangulaire.

4. Chapeau de palier (3) selon l'une des revendications 1 à 3, **caractérisé en ce que** les saillies (7) sont réalisées de façon au moins partiellement arrondie.

5. Chapeau de palier (3) selon la revendication 4, **caractérisé en ce que** l'arrondi présente un rayon (16) qui est sélectionné dans une plage ayant une limite inférieure de 0,01 mm et une limite supérieure de 4 mm.

6. Chapeau de palier (3) selon l'une des revendications 1 à 5, **caractérisé en ce qu'**au moins une surface latérale (15) de la saillie (7) ou respectivement des saillies (7) placée dans la direction de la largeur (10) de la surface de serrage (5) présente, par rapport à la surface de serrage (5), un angle d'inclinaison (14) qui est sélectionné dans une plage ayant une limite inférieure de 90° et une limite supérieure de 160°.

7. Chapeau de palier (3) selon l'une des revendications 1 à 6, **caractérisé en ce que** la saillie (7) ou respectivement les saillies (7) est ou respectivement sont munies d'un gradin (19) dans la plage d'au moins un des deux flancs latéraux (18).

8. Chapeau de palier (3) selon la revendication 7, **caractérisé en ce que** le gradin (19) forme un creux (21) ou respectivement une cuvette dans le flanc latéral (18).

9. Ensemble de palier (1) avec un chapeau de palier (3) et un corps de palier (2) qui lui est adjacent, **caractérisé en ce que** le chapeau de palier (3) est formé selon l'une des revendications 1 à 8.
